# EUROPÄISCHE PATENTANMELDUNG

(11) **EP 1 728 548 A1**
(43) Veröffentlichungstag der Anmeldung: **06.12.2006**
(21) Anmeldenummer: 05011888.4
(22) Anmeldetag: 02.06.2005
(51) Int. Cl.: B01F 13/00, B01F 15/00, A01C 3/02, B01F 7/00, B01F 7/16

(54) **Rührvorrichtung zum Homogenisieren von Gülle**

(71) Anmelder: Brand Gülletechnik GmbH, 49176 Hilter (DE)
(72) Erfinder: Brand, Heinrich, 49176 Hilter-Eppendorf (DE); Brand, Benno, 49086 Osnabrück (DE)
(74) Vertreter: Brandt, Detlef

(57) **Zusammenfassung**

Es wird eine Rührvorrichtung zum Homogenisieren von Gülle und anderen Flüssigkeiten vorgestellt, bei deren Einsatz in Kuh- oder Schweineställen der Rührflügel durch die Spalten zwischen den Gitterrosten oder Lattenrosten geführt werden muss. Bekannt ist eine Rührvorrichtung (1) mit einer Rühreinrichtung (2), bestehend aus einer Rührwelle (3) mit einem Rührflügel (4) und einer Rührwellenführung (5) sowie einem mit der Rührwelle (3) gekoppelten Antriebsaggregat (6), das zusammen mit der Rühreinrichtung (2) um eine Schwenkachse schwenkbar und in mehreren Schwenkstellungen festlegbar sowie in der Höhe verstellbar ist. Erfindungsgemäß wird vorgeschlagen, die Rühreinrichtung (2) in jeder Schwenkstellung um die Rotationsachse (7) der Rührwelle (3) drehbar an einem Träger (8) zu befestigen.

## Beschreibung

Die Erfindung betrifft eine Rührvorrichtung zum Homogenisieren von Gülle und anderen Flüssigkeiten nach dem Oberbegriff des Patentanspruches 1.

Derartige Rührvorrichtungen sind in unterschiedlichen Ausführungen und für verschiedene Einsatzzwecke bekannt.

Aus der gattungsbildenden DE-OS 24 20 605 geht eine Rührvorrichtung hervor, die eine Rühreinrichtung, bestehend aus einer Rührwelle mit einem endseitig daran befestigten .Rührflügel, und eine Rührwellenführung in Form eines Führungsrohres aufweist. Ein mit der Rührwelle gekoppeltes Antriebsaggregat ist nach der Offenbarung der Schrift zusammen mit der Rühreinrichtung um eine Schwenkachse schwenkbar und in mehreren Schwenkstellungen festlegbar, sodass damit das aufgerührte Medium besser verteilt und größere Bereiche vermischt werden können, als dies bei einer nicht schwenkbaren Ausführung der Fall wäre. Die Höhenverstellbarkeit des Antriebsaggregates zusammen mit der Rühreinrichtung wird bei dieser Ausführung mittels einer Zahnstange realisiert, die mit einer korrespondierenden Handkurbel verbunden ist. Zur Verbesserung der Beweglichkeit einer derartigen Rührvorrichtung beschreibt die DE-OS 24 20 605 ferner einen Drehkranz, der eine Rotation um die Rotationsachse der Rührwelle in nur einer Ebene ermöglicht.

Eine derartige Rührvorrichtung ist nur für Gruben mit einer hinreichend großen Öffnung geeignet, weil das aus der vertikalen 0-Stellung ausgeschwenkte Antriebsaggregat mit der daran befestigten Rühreinrichtung bei einer überlagerten Drehung mittels des Drehkranzes einen sehr großen Kreisbogen beschreibt. Folglich ist diese Rührvorrichtung nicht für den Einsatz als Spaltenmixer geeignet, der beispielsweise in Kuh- oder Schweineställen durch die eng beabstandet zueinander angeordneten Betonspaltenböden, Gitterroste oder Lattenroste geführt wird, um die in den darunter befindlichen Güllekanälen angesammelte, verfestigte Gtille zu verrühren und damit zu homogenisieren beziehungsweise zu verflüssigen. Eine Eigenart dieser Spaftenmixer ist es deshalb auch, dass die Rührwellenführung einen flachen Querschnitt aufweist, weshalb sie häufig als "Schwert" bezeichnet wird. Die Rührvorrichtung nach der DE-OS 24 20 605 kann auch aus diesem Grund nicht als Spaltenmixer zum Einsatz kommen, da hier ein Führungsrohr verwendet wird, um die Rührwelle zu führen und zu lagern. Für dieses Führungsrohr ist damit ein erheblicher Öffnungsquerschnitt erforderlich, durch den die Rühreinrichtung hindurch geführt werden muss.

Darüber hinaus stellt sich bei der Verwendung einer Rührvorrichtung als Spaltenmixer ein weiteres Problem. Wird die Rührvorrichtung nämlich nicht exakt über dem recht schmalen Spalt zwischen zwei Gitterstäben oder Lattenrosten aufgestellt, sodass die Rotationsachse der Rühnnrelle nicht mit der Mitte des Spaltes zusammenfällt, kann die Rühreinrichtung nicht unter die Gitterstäbe beziehungsweise Lattenroste abgesenkt werden, sodass die Rührvorrichtung zunächst insgesamt neu positioniert werden muss, bis das Absenken möglich ist. Dies ist zeitaufwändig und körperlich anstrengend, weshalb eine derartige Situation ausgeschlossen werden sollte.

Der Erfindung liegt die Aufgabe zugrunde, eine Rührvorrichtung zum Einsatz als Spaltenmixer bereitzustellen, die einfach zu handhaben ist und ein Einführen der Rühreinrichtung in die Spalte zwischen Gitterrosten oder Lattenrosten aus unterschiedlichen Positionen der Rührvorrichtung ermöglicht.

Die Erfindung löst diese Aufgabenstellung mit den kennzeichnenden Merkmalen des Schutzanspruches 1. Weitere Ausgestaltungen der Erfindung sind Gegenstand der Unteransprüche.

Eine erfindungsgemäße Rührvorrichtung sieht zur Lösung der Aufgabe vor, eine Rührvorrichtung nach dem Oberbegriff des Patentanspruches 1 dahingehend weiterzubilden, dass die Rühreinrichtung in jeder Schwenkstellung um die Rotationsachse der Rührwelle drehbar an einem Träger befestigt ist.

Die aus der Rührwelle mit dem endseitig daran befestigten Rührflügel und einer Rührwellenführung bestehende Rühreinrichtung kann bei der erfindungsgemäßen Lösung auch bei nicht exakt über den Spalten zwischen den Gitterrosten beziehungsweise Lattenrosten aufgestellter Rührvorrichtung durch ein Verschwenken um die Schwenkachse und Drehen um die Rotationsachse in eine Schrägstellung verbracht werden, die dann ein Einführen in den Spalt ermöglicht. Ein weiterer wesentlicher Vorteil der Erfindung ist auch darin zu sehen, dass die erfindungsgemäße Rührvorrichtung infolge der Rotationsmöglichkeit der Rühreinrichtung sogar so einstellbar ist, dass sie während des Betriebes, also mit in den Spalt eingeführter Rühreinrichtung, entlang des Spaltes verfahrbar ist. Dies schafft eine neuartige Beweglichkeit und Flexibilität der erfindungsgemäßen Rührvorrichtung und führt zu weitaus verbesserten Ergebnissen in der Homogenisierung des zu verrührenden Mediums in kürzerer Zeit und ohne körperliche Anstrengung, sodass auch Gesundheitsrisiken des Nutzers verringert werden können.

Dem Bestreben folgend, die Rührvorrichtung möglichst einfach montieren, demontieren und bedienen zu können, wird gemäß einer Ausgestaltung der Erfindung vorgeschlagen, dass die Rühreinrichtung einen Flansch zu ihrer lösbaren Befestigung an dem Träger aufweist.

Mittels dieses Flansches kann die Rühreinrichtung beispielsweise Ober eine kraftschlüssige oder formschlüssige Verbindung derart an dem Träger befestigt sein, dass der Flansch fixiert ist oder eine permanente Rotation der Rühreinrichtung während des Betriebes der Rührvorrichtung möglich bleibt.

Eine sehr einfache lösbare Arretierung der Rühreinrichtung kann darin gesehen werden, dass der Flansch zwischen dem Träger und einem Haltering aufgenommen ist. Der Haltering kann einteilig, mit einem Schlitz beziehungsweise auch mehrteilig ausgeführt sein. Die Gestaltung des Halteringes richtet sich nach dem Aufwand für seine Montage beziehungsweise Demontage und der Gestaltung der angrenzenden Bauteile.

Im einfachsten Falle wird darüber hinaus vorgeschlagen, zur Befestigung des Flansches am Träger eine Schraubverbindung einzusetzen. Um die Arretierung des Flansches zu erleichtern und möglichst ohne Zuhilfenahme von Werkzeugen auszukommen, kann zum Beispiel mindestens ein einen Schraubenbolzen aufweisendes Handrad vorgesehen werden. Dieser Schraubenbolzen ist in ein korrespondierendes Gewinde eindrehbar. Mit einer derartigen, sehr einfachen und damit kostengünstigen Variante kann der Flansch und damit die Rühreinrichtung schnell und unkompliziert fixiert, vollständig gelöst oder nur gelockert werden, um sie beispielsweise um die Rotationsachse der Rührwelle zu verdrehen beziehungsweise um sie zu montieren oder zu demontieren.

Zur Verbesserung der Rotationseigenschaften der Rühreinrichtung ist es vorteilhaft, wenn der Flansch einen kreisförmigen Außenumfang aufweist und bei gelockerter Befestigung des Flansches diese Außenumfangsfläche an mindestens einem Lager gleitend geführt ist. Dabei kann das Lager Bestandteil der zuvor bereits genannten Verschraubung mittels eines Handrades oder als separate Lagerstelle gestaltet sein.

Bei einer als Spaltenmixer ausgeführten Rührvorrichtung besteht die Rührwellenführung aus mindestens einem Schwert. In der Regel kommen jedoch zwei die Rührwelle zwischen sich aufnehmende Schwerter zum Einsatz.

Die Rührwellenführung ist deshalb erforderlich, da die stark beanspruchte Rührwelle eine oftmals erhebliche Länge aufweist und sich ansonsten bei einer Beaufschlagung mit einer Leistung von beispielsweise 5,5 bis 9,2 kW unerwünscht verformen würde. Aus diesem Grund wird vorteilhafter Weise durch die Rührwellenführung zumindest eine Lagerung der Rührwelle vorgesehen. Kommen mehrere Schwerter als Rührwellenführungen zum Einsatz, befindet sich die zumindest eine Lagerstelle zwischen den Schwertern.

Zur Verbesserung der Aufbereitung des zu verrührenden Mediums kann die Rührwellenführung ebenso wie zur Reinigung und Spülung der Lagerstellen einen Spülwasser leitenden Spülwasseranschluss aufweisen. Bevorzugt wird dieses Spülwasser auch zum Rührflügel geführt.

Eine erfindungsgemäße Rührvorrichtung zeichnet sich auch durch die Schwenkbarkeit des Antriebsaggregates zusammen mit der Rühreinrichtung aus. Es kann um 180° komplett gedreht und damit in eine kompakte, leicht transportable Position verbracht werden. Dies ist insbesondere möglich, wenn es nach dem Verschwenken um 180° in der Höhe verschoben, also angesenkt wird, um es in eine bodennahe Position zu bringen.

Weiterhin geht eine Ausgestaltung der Erfindung dahin, dass der Schwenkwinkel des um die Schwenkachse schwenkbaren Antriebsaggregates bis zu 360° beträgt. Somit kann das Antriebsaggregat vollständig um die eigene Schwenkachse gedreht werden, wobei hier eine Arretierung des verschwenkten Antriebsaggregates mit der Rühreinrichtung in beliebigen Schwenkstellungen vorgesehen ist.

Zur Transporterleichterung kann die erfindungsgemäße Rührvorrichtung ein die Rührvorrichtung insgesamt aufnehmendes Gestell aufweisen, das als ein Fahrgestell mit Rädern ausgestaltet ist.

Eine erfindungsgemäße, bevorzugte Ausführungsform wird nachfolgend anhand der Zeichnung beschrieben:

Es zeigt:
- Figur 1:: eine perspektivische Ansicht einer als Spaltenmixer im Einsatz befindlichen Rührvorrichtung, wobei die Rührvorrichtung exakt über dem Spalt angeordnet ist,
- Figur 2:: eine perspektivische Ansicht einer als Spaltenmixer im Einsatz befindlichen Rührvorrichtung, wobei hier die Rührvorrichtung in einer Schrägstellung zum Spalt angeordnet ist,
- Figur 3:: ausschnittsweise eine vereinfachte Ansicht von der Rührflügelseite her im Schnitt
- und Figur 4:: ausschnittsweise und vereinfacht ein Schnitt entlang einer Ebene durch die Rührwellenführung.

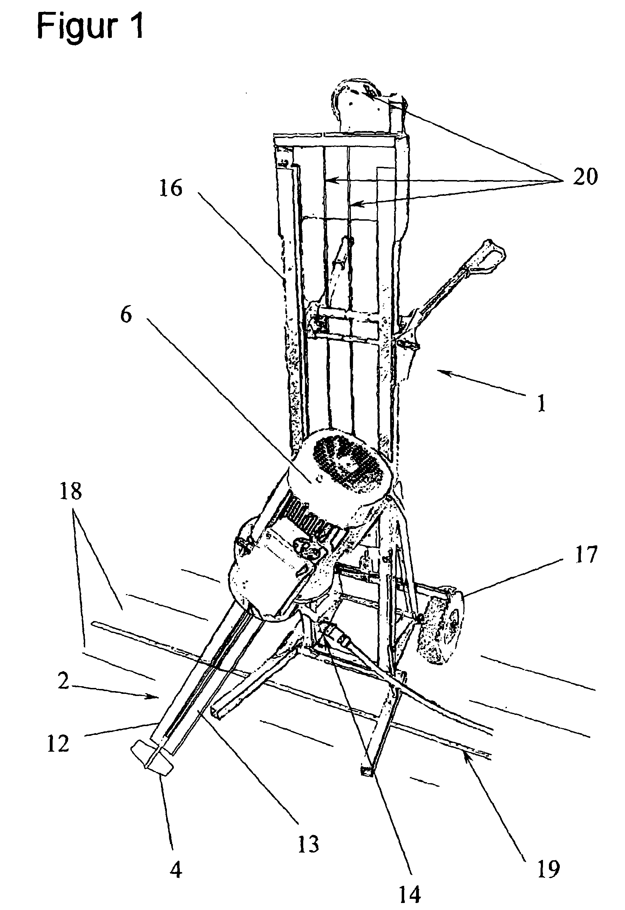

In der Figur 1 ist in räumlicher Ansicht eine insgesamt mit 1 bezeichnete Rührvorrichtung als Spaltenmixer gezeigt, der in Kuh- oder Schweineställen mit Betonspaltenböden beziehungsweise mit Gitter- oder Lattenrosten 18 zum Homogenisieren von Gülle eingesetzt wird. Um den Rührflügel 4 durch die zwischen den Gitter- oder Lattenrosten 18 vorhandenen Spalte 19 führen zu können, weist die Rührwellenführung 5 eine im Querschnitt flache, also spaltgerechte Kontur auf. In Folge dieser Formgebung wird die Rührwellenführung 5 auch als "Schwert" bezeichnet. Die Rühreinrichtung 2 besteht aus einer Rührwelle 3 mit dem endseitig daran befestigten Rührflügel 4 und der erwähnten Rührwellenführung

Ein auf der dem Rührflügel 4 gegenüber liegenden Seite der Rührwelle 3 mit dieser gekoppeltes Antriebsaggregat 6 ist zusammen mit der Rühreinrichtung 2 um eine Schwenkachse schwenkbar und in mehreren Schwenkstellungen festlegbar sowie in der Höhe verstellbar ausgeführt. Die Schwenkbarkeit wird durch die Montage des Antriebsaggregates auf einem in der Figur 1 nicht näher bezeichneten Träger 8 gewährleistet, der seinerseits um eine Schwenkachse schwenkbar an dem Gestell 16 befestigt ist. Dabei kann das Antriebsaggregat in mehreren Schwenkstellungen fixiert werden. Eine um eine etwa horizontale Schwenkachse verschwenkte und in dieser Stellung fixierte Position des Antriebsaggregates 6 ist in der Figur 1 gezeigt. Um das Antriebsaggregat 6 und die mit diesem gekoppelte Rühreinrichtung 2 in der Höhe verstellen zu können und damit die Rühreinrichtung 2 in den Spalt 19 absenken oder wieder aus diesem heraus bewegen zu können, weist die Rührvorrichtung 1 eine Höheneinstelleinrichtung 20 auf, die vorliegend in an sich bekannter Weise aus einem Rollen-Seilzugsystem mit einer im oberen Bereich des Gestells 16 vorhandenen Handkurbel zum Bedienen besteht. Das Gestell 16 ist als ein transportables Fahrgestell mit zwei Rädern 17 gestaltet, sodass die Rührvorrichtung einfach transportiert werden kann.

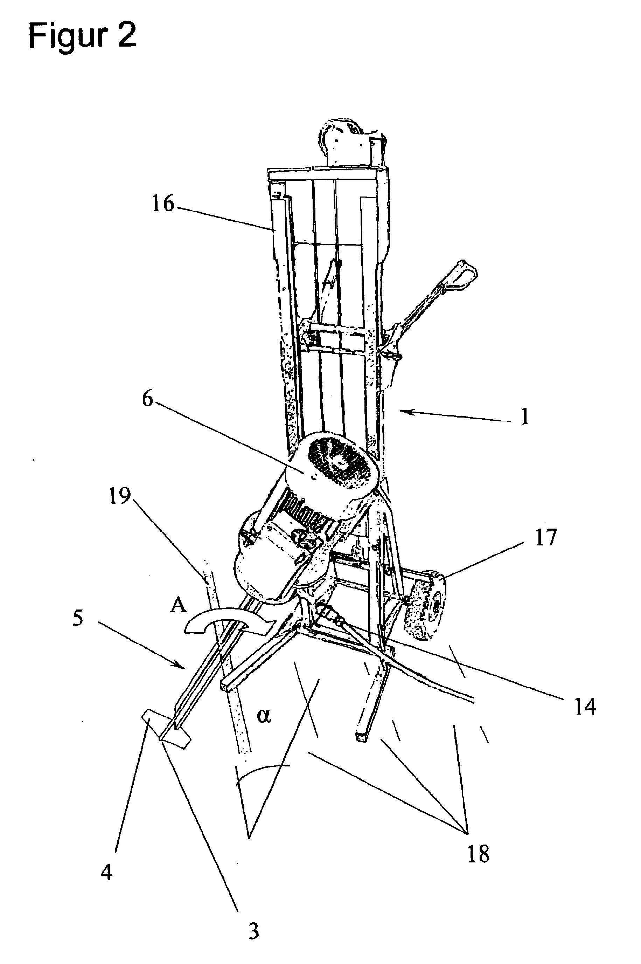

Die in der Figur 2 gezeigte Rührvorrichtung lässt die erfindungsgemäßen Besonderheiten erkennen. Hier ist die Rührvorrichtung 1 nicht exakt über dem Spalt 19 ausgerichtet aufgestellt. Vielmehr steht die Rührvorrichtung 1 unter einem Winkel α zum Spalt 19 auf den Gitter- oder Lattenrosten 18. Bei Ausführungen nach dem Stand der Technik wäre die Rühreinrichtung 2 in dieser Position der Rührvorrichtung 1 nicht in den Spalt 19 einführbar. Wie jedoch aus der Darstellung ersichtlich ist, kann die Rühreinrichtung 2, bestehend aus der Rührwelle 3 mit dem Rührflügel 4 und der Rührwellenführung 5 insgesamt um die Rotationsachse 7 der Rührwelle 3 gedreht werden, was der Richtung des Pfeiles A in Figur 2 entspricht (hier: Drehung im Uhrzeigersinn). Dies ist in jeder um die Schwenkachse ausgelenkten Schwenkstellung möglich. Die Rühreinrichtung ist zur Umsetzung dieser Lösung drehbar an dem Träger 8 befestigt, der im vorliegenden Fall auch der Träger für das Antriebsaggregat 6 ist.

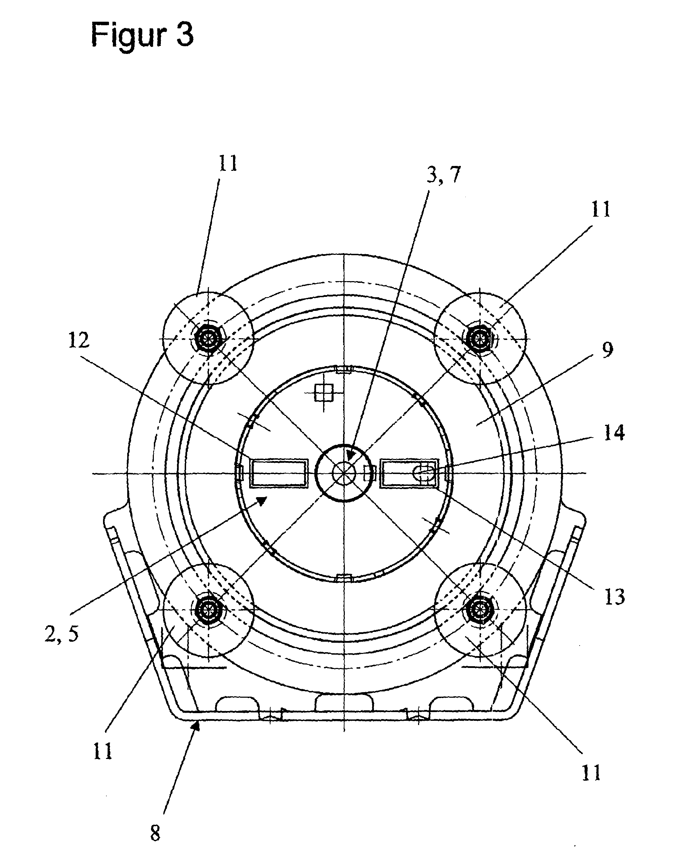

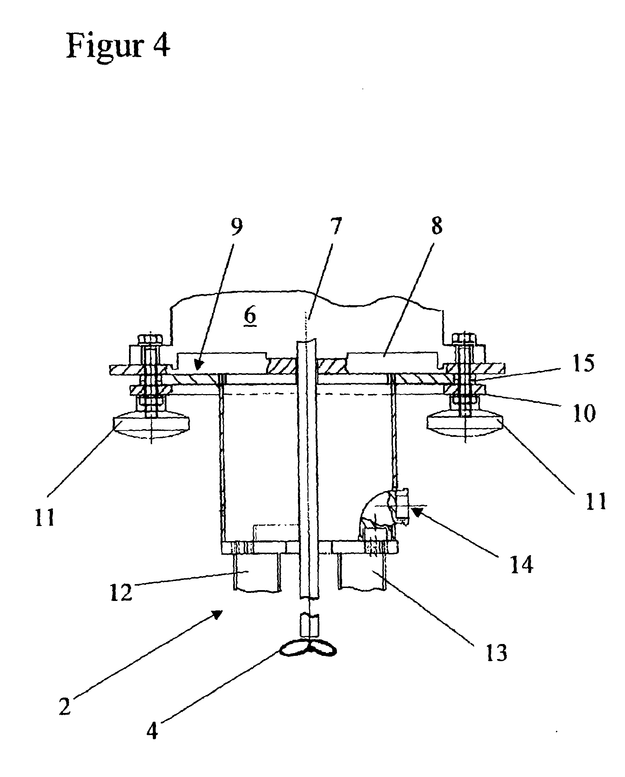

Bei der Darstellung der Figur 3 ist ausschnittsweise eine vereinfachte Ansicht von der Rührflügelseite her im Schnitt gezeigt. Die Rühreinrichtung 2 weist einen Flansch 9 zu ihrer lösbaren Befestigung an dem Träger 8 auf. Dieser Flansch 9 ist mittels einer kraftschlüssigen Verbindung, vorliegend einer Schraubverbindung, an dem Träger 8 befestigt. Wie anschaulicher aus der Figur 4 hervorgeht, durchsetzen mehrere Schraubenbolzen, die auf einer Seite mit einem Handrad 11 ausgestattet sind, den Träger 8, den Flansch 9 und einen den Zusammenhalt der Bauteile unterstützenden Haltering 10, der von der Seite der Rühreinrichtung 2 gesehen an dem Flansch 9 zur Anlage kommt. Der Flansch 9 weist einen kreisförmigen Außenumfang auf und ist mit dieser Außenumfangsfläche an mehreren Lagern 15 gleitend geführt. Die Lager 15 sind bei der gezeigten Ausführung Bestandteil der Verschraubungen und befinden sich zwischen Träger 8 und Haltering 10.

Die Rührwellenführung 5 besteht aus zwei die Rührwelle 3 zwischen sich aufnehmenden Schwertern 12, 13, wobei die Rührwelle 3 in der Rührwellenführung 5 gelagert ist.

Zur Reinigung des Rührflügels, der Lagerstellen beziehungsweise zur Verbesserung der Verflüssigung des zu verrührenden Mediums verfügt die Ftührvvellenführung 5 über einen Spülwasser leitenden Spülwasseranschluss 14, der hier in dem Schwert 13 vorgesehen ist

### Bezugszeichenliste

- 1: Rührvorrichtung
- 2: Rührvorrichtung
- 3: Rührwelle
- 4: Rührflügel
- 5: Rührwellenführung
- 6: Antriebsaggregat
- 7: Rotationsachse
- 8: Träger
- 9: Flansch
- 10: Haltering
- 11: Handrad
- 12: Schwert
- 13: Schwert
- 14: Spülwasseranschluss
- 15: Lager
- 16: Gestell
- 17: Rad
- 18: Lattenrost
- 19: Spalt
- 20: Höheneinstelleinrichtung

## Patentansprüche

1. Rührvorrichtung zum Homogenisieren von Gülle und anderen Flüssigkeiten, wobei die Rührvorrichtung (1) mindestens aufweist:
- eine Rühreinrichtung (2), bestehend aus einer Rührwelle (3) mit einem Rührflügel (4) und einer Rührwellenführung (5),
- ein mit der Rührwelle (3) gekoppeltes Antriebsaggregat (6), das zusammen mit der Rühreinrichtung (2) um eine Schwenkachse schwenkbar und in mehreren Schwenkstellungen festlegbar sowie in der Höhe verstellbar ist,
**dadurch gekennzeichnet, dass**
die Rühreinrichtung (2) in jeder Schwenkstallung um die Rotationsachse (7) der Rührwelle (3) drehbar an einem Träger (8) befestigt ist.

2. Rührvorrichtung Anspruch 1,
**dadurch gekennzeichnet, dass**
die Rühreinrichtung (2) einen Flansch (9) zu ihrer lösbaren Befestigung an dem Träger (8) aufweist.

3. Rührvorrichtung nach Anspruch 2,
**dadurch gekennzeichnet, dass**
der die Rotation der Rühreinrichtung (2) ermöglichende Flansch (9) mittels einer kraftschlüssigen oder formschlüssigen Verbindung an dem Träger (8) befestigt ist.

4. Rührvorrichtung nach einem der Ansprüche 2 oder 3,
**dadurch gekennzeichnet, dass**
der Flansch (9) zwischen dem Träger (8) und einem Haltering (10) aufgenommen ist.

5. Rührvorrichtung nach Anspruch 5,
**dadurch gekennzeichnet, dass**
der Haltering (10) geschlitzt oder mehrteilig ausgeführt ist.

6. Rührvorrichtung nach Anspruch 3, 4 oder 5,
**dadurch gekennzeichnet, dass**
zur Befestigung des Flansches (9) mindestens ein einen Schraubenbolzen aufweisendes Handrad (11) vorhanden ist.

7. Rührvorrichtung nach einem der vorstehend genannten Ansprüche 2 bis 6,
**dadurch gekennzeichnet, dass**
der Flansch (9) einen kreisförmigen Außenumfang aufweist und bei gelockerter Befestigung des Flansches (9) diese Außenumfangsfläche an mindestens einem Lager (15) gleitend geführt ist.

8. Rührvorrichtung nach einem der vorstehend genannten Ansprüche,
**dadurch gekennzeichnet, dass**
die Rührwellenführung (5) aus zwei die Rührwelle (3) zwischen sich aufnehmenden Schwertern (12, 13) besteht.

9. Rührvorrichtung nach einem der vorstehend genannten Ansprüche 3,
**dadurch gekennzeichnet, dass**
die Rührwelle (3) in der Rührwellenführung (5) gelagert ist.

10. Rührvorrichtung nach einem der vorstehend genannten Ansprüche,
**dadurch gekennzeichnet, dass**
die Rühnruellenführung (5) zumindest einen Spülwasser zum Rührflügel (4) leitenden Spülwasseranschluss (14) aufweist.

11. Rührvorrichtung nach einem der Ansprüche 1 bis 10,
**dadurch gekennzeichnet, dass**
der Schwenkwinkel des um die Schwenkachse schwenkbaren Antriebsaggregates (6) bis zu 360° beträgt.

12. Rührvorrichtung nach einem der vorstehend genannten Ansprüche,
**dadurch gekennzeichnet, dass**
ein die Rührvorrichtung insgesamt aufnehmendes Gestell (16) ein Fahrgestell mit Rädern ist.
